# EUROPÄISCHE PATENTSCHRIFT

(11) **EP 1 350 216 B1**
(45) Veröffentlichungstag und Bekanntmachung des Hinweises auf die Patenterteilung: **09.05.2007**
(21) Anmeldenummer: 01991851.5
(22) Anmeldetag: 14.12.2001
(51) Int. Cl.: G06K 1/00

(54) **VERFAHREN ZUR VERRECHNUNG EINER LEISTUNG DURCH ERFASSUNG EINES BILLETS**
METHOD FOR BILLING A SERVICE BY REGISTERING A TICKET
METHODE POUR LA FACTURATION D'UN SERVICE PAR ENREGISTREMENT D'UN TICKET

(30) Priorität: 09.01.2001 EP 01100498
(43) Veröffentlichungstag der Anmeldung: 08.10.2003
(73) Patentinhaber: Siemens VDO Automotive AG, 8212 Neuhausen (CH)
(72) Erfinder: REBSAMEN, Aldo, CH-9500 Wil (CH)
(74) Vertreter: Kley, Hansjörg
(86) Internationale Anmeldenummer: PCT/EP2001/014796
(87) Internationale Veröffentlichungsnummer: WO 2002/056237

(56) Entgegenhaltungen:
- EP-A- 0 465 456
- EP-A- 0 971 320
- WO-A-01/20557
- WO-A-99/41919
- US-A- 5 122 643

## Beschreibung

Die vorliegende Erfindung betrifft ein Verfahren zur Verrechnung einer bezogenen Leistung nach dem Oberbegriff des Patentanspruchs 1.

In der internationalen Anmeldung WO 01/20557 A1 (Häni-Prolectron AG, CH - Bronschhofen) sind ein Erfassungssystem und ein Erfassungsverfahren für eine zu beziehende Leistung mit einem ein Sendemodul aufweisenden tragbaren Billett vorgeschlagen. Dieses Erfassungsverfahren beruht darauf, dass die bezogene Leistung in einem abgesetzten Rechnersystem verbucht und dann in einem Credit-Verfahren, z.B. mittels einer Monatsrechnung, dem betreffenden Billetinhaber belastet wird. Dieses Verfahren bedingt, dass der Betreiber des Erfassungssystem die Identität des Billettinhabers kennt. Nachteilig bei diesem Verfahren ist, dass mit den so erfassten Leistungen von der betreffenden Person im Falle von Billetten für den Nah- und Fernverkehr ein exaktes Bewegungsprofil vorliegt, das aus Gründen des Persönlichkeitsschutzes nicht erwünscht ist und beim Publikum in erheblichem Ausmass auf Ablehnung stösst.

In der Mobilkommunikation kann gemäss dem System GSM (GSM Global System for Mobile Communication) mit einer speziellen SIM-Card (SIM Subscriber Identity Modul) eine Verrechnung einer bezogenen Leistung in Echtzeit vorgenommen werden, ohne dass der Netzbetreiber die Identität des Kunden kennt. Dazu sind auf der SIM-Karte Makros vorhanden, die zusammen mit einem dem HLR (HLR Home Location Register) zugeordneten Register eine Abbuchung der Gebühreneinheiten von einem gespeicherten Guthaben vornehmen und das verbleibende Restguthaben auf dem Display des Mobiltelefongerätes anzeigen. Wird das Guthaben aufgebraucht, erfolgt mit einem Disconnect ein erzwungener Verbindungsabbau. Es sind in der Folge keine weiteren kostenpflichtigen Verbindungen mehr möglich. Mit einer sogenannten an jedem Kiosk käuflichen Valuecard kann in einem dem HLR zugeordneten Register wiederum ein Guthaben angelegt werden. Dadurch ist ohne weitere Massnahmen keine Zuordnung von SIM-Card bzw. Teilnehmernummer zum Benutzer möglich. Somit ist die Anonymität gewahrt. Diese Anonymität wird auch dann nicht gebrochen, wenn beim Verkauf einer SIM-Card eine Identifikation der erwerbenden Person erhoben würde, da die Valuecard erst beim Laden eines Guthabens einer SIM-Card zugeordnet werden kann.

In ComTec 2/1997 p. 16-20 der schweizerischen Telecom PTT ist ein Verfahren für ein GSM Prepaid-System beschrieben, bei dem die Taxdaten unabhängig voneinander sowohl netzseitig als auch teilnehmerseitig verarbeitet und überwacht werden. Dazu wird der Dienst AOCC (AOCC Advice of Charge Charging) benötigt. Dieses beschriebene Verfahren hat den Vorteil, dass Betrugsversuche auf diese Weise sicher detektiert werden können und auch netzseitig sofort mit einem Disconnect oder dazu eskalierenden Massnahmen wie z.B. eine Sperrung der geheimen Kennummer IMSI (International Mobil Subscriber Identity) eingeleitet werden kann.

Ein weiteres Abbuchungsverfahren mit zentral gespeicherten Tariftabellen und einer Verrechnung direkt beim Benutzer auf der SIM-Card ist in WO 99/41919 (Swisscom AG, CH-Bern) offenbart. Vorteilhaft an diesem Verfahren ist, dass kein weiteres Billingsystem benötigt wird.

Die vorstehend erwähnten und in der Mobilkommunikation gebräuchlichen Verfahren sind aus folgenden Gründen für die Erfassung und Verrechnung von Billetten - im folgenden auch Fahrgeldverrechnung genannt - nicht anwendbar:
i) Wenn ein Guthaben auf einem Billett während einer Fahrt aufgebraucht wird, kann der betreffende Fahrgast nicht einfach zum Fahrzeug hinauskomplimentiert werden;
ii) unabhängig vom Zahlungsverfahren, d.h. Debit- oder Creditsystem, soll ein Rabattsystem für Vielfahrer und auch für Mehrfachfahrer, z.B. Familienbilletten möglich sein, realisiert werden.
iii) Auf jedem Fahrzeug muss der anzuwendende Tarif abhängig von der aktuellen Lage des Fahrzeugs bekannt sein. Eine zurückgelegte Wegeinheit wie beim Taxi kann nicht benutzt werden, da Distanzkilometer ungleich Tarifkilometer sind. Eine beanspruchte Zeiteinheit für den Aufenthalt in einem öffentlichen Verkehrsmittel gegenüber einem Taxi könnte zwar auch verrechnet werden, dies wird aber von den Benützern der öffentlichen Massenverkehrsmittel nicht akzeptiert: Der Aufenthalt in einem Stau ist ärgerlich genug und dafür darf der Fahrgast nicht belastet werden.
iv) Es ist mit erheblichen Schwierigkeiten verbunden, auf allen Fahrzeugen eines Verkehrsverbundes stets aktuelle Tariftabellen verfügbar zu halten. So sind die Tarife tageszeitabhängig und benötigen eine einigermassen stabile Zeitbasis. In Tunneln ist darüber hinaus die Kommunikation zwischen einer zentralen Einheit und den Fahrzeugen nicht stets gewährleistet.

In EP 0 971 320 A1 (Baran Advanced Technologies Ldt, IL - Omer) ist eine Fahrzeugparking-System offenbart, bei dem ein Transponder mit einem Zusatzgerät gekoppelt ist. Transponder und Zusatzgerät sind für den Einsatz in einem Fahrzeug vorgesehen. Falls mit einem aussenstehenden Computersystem keine Verbindung aufgebaut werden kann oder eine Verbindung unterbrochen ist, erfolgt das Herunterzählen der noch erlaubten Parkzeit im Zusatzgerät mit einem angenommenen Wert pro Geledeinheit. Beim Verlassen des Fahrzeuges, das den Transponder und das Zusatzgerät enthält, erfolgt dann mit dem aussenstehenden Computersystem in eine Kommunikation, so dass der tatsächliche Betrag für die Fakturierung festgelegt werden kann. Dieses Verfahren eignet sich aber nur für die Bezahlung mit dem Credit-Verfahren.

Der vorliegenden Erfindung liegt daher die Aufgabe zugrunde, eine Leistungserfassung und eine zugehörige Verrechnung auf dem Prinzip des Debit-Verfahrens anzugeben, das eine anonyme Erfassung und Verrechnung einer bezogenen Leistung ermöglicht und ohne dass der aktuelle Tarif in der Erfassungszone zugänglich sein muss.

Diese Aufgabe wird durch die im Patentanspruch 1 angegebenen Massnahmen gelöst. Vorteilhafte Ausgestaltungen der Erfindung sind in weiteren Ansprüchen angegeben.

Das erfindungsgemässe Verfahren erlaubt, dass auf dem Billett mit provisorischen Tarifeinheiten der aktuelle Tarif in der Erfassungszone nicht zugänglich zu sein braucht und dass auf dem vom abgesetzten Rechnersystem geführten Konto durch entsprechende Buchungen die Vorteile des Creditverfahrens, wie z.B eine volumenabhängige Rabattierung, trotzdem verfügbar sind.

So können sich die folgenden Vorteile zusätzlich ergeben:
i) Dadurch, dass auf dem Billett ein Anzeigeelement vorgesehen ist und dass der mutmassliche Wert der zu erfassenden Leistung in der ersten Informationseinheit enthalten ist, kann ein Benutzer einerseits den aktuellen Stand des Schattenkontos ohne weitere Geräte feststellen und sich über eine allfällig ungenügende Deckung gemäss dem Stand des Schattenkontos im voraus informieren.
ii) Dadurch, dass im Verfahrensschritt A von wenigstens einer einer Eintrittszone und/oder einer Durchgangszone zugeordneten Sendeeinheit eine weitere Informationseinheit an alle in den vorgenannten beiden Zonen befindlichen Billette übermittelt wird, in der ein Mindestbetrag enthalten ist und dass das Billett ein Anzeigeelement aufweist, auf dem der Stand des Schattenkontos angezeigt wird;
   kann sichergestellt werden, dass ein Benutzer des Billettes, diese Zonen gegebenenfalls wieder verlassen kann, um in keine ungedeckte Leistungserfassung zu geraten.
iii) Dadurch, dass zu bestimmten zeitpunkten in der ersten Informationseinheit der Stand des vom abgesetzten Rechnersystems geführten Kontos übermittelt wird und auf das Schattenkonto übertragen wird,
   ist ein Benutzer eines solchen Billettes stets über den aktuellen Stand seines Kontos informiert.
iv) Dadurch, dass auf einem der Sende-/Empfangseinheit zugeordneten Anzeigeeinheit der Stand des Schattenkontos jener Billette angezeigt wird,
   ergibt sich für das Kontrollpersonal die Möglichkeit, nur noch jene Personen zu kontrollieren, die entweder kein Billett oder ein Billett mit ungenügendem Schattenkontostand benutzen.
v) Dadurch, dass die Identität eines oder mehrerer Billette zu dem auf dem abgesetzten Rechnersystem geführten Konto zugeordnet wird,
   darf ein solches Billett verloren werden, ohne dass ein allfälliges Guthaben auch verloren ist.
vi) Dadurch, dass ein Benutzungszustand der Billette in einer auf dem abgesetzten Rechnersystem befindlichen Datenbank geführt wird,
   kann ein unberechtigterweise benutztes Billett erkannt werden.

Die Erfindung wird nachfolgend anhand der Zeichnung beispielsweise näher erläutert. Dabei zeigen:
- Figur 1: Darstellung des Erfassungssystems mit den einzelnen Komponenten;
- Figur 2: Billett mit einem Anzeigeelement;
- Figur 3: Verbindungen abgesetztes Rechnersystem / Clearing-System mit Schreib-Lesevorrichtung / Card-Station.

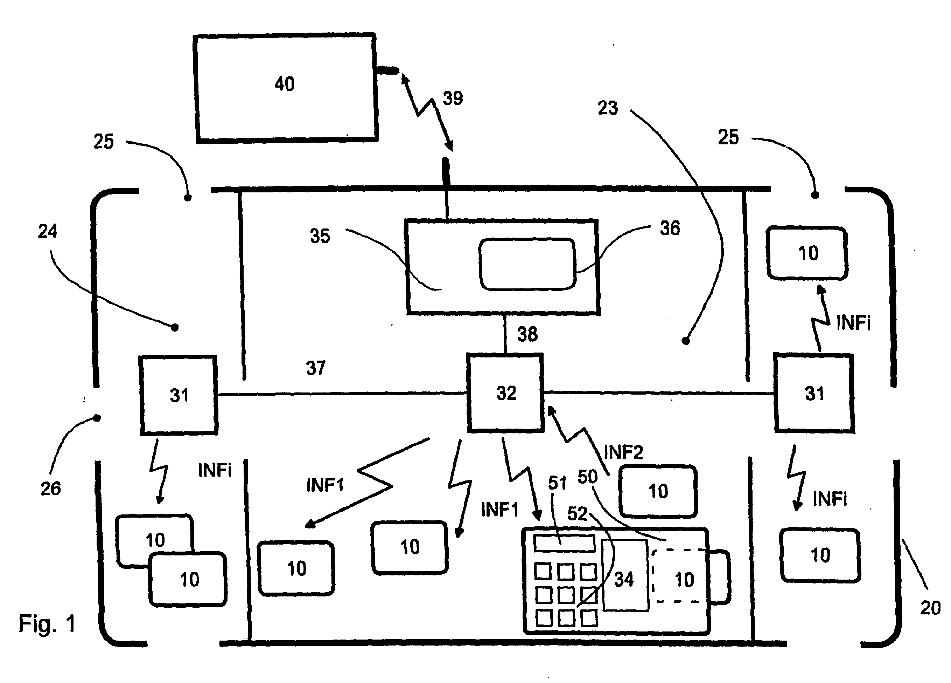

In Fig. 1 ist der Grundriss eines Eisenbahnwagens 20 mit je einer Einstiegszone 25 und einer Durchgangszone 26 an den Wagenenden dargestellt. Die Durchgangszone 26 ermöglicht den Durchgang zu einem weiteren Wagen einer zugskomposition. Die Einstiegszone 25 und die Durchgangszone 26 erlauben den Zugang durch eine Plattform 24 zum Passagierraum 23, der oft mit einer Zwischenwand 21 getrennt ist, die als Halbwand oder als Glaswand ausgebildet sein kann. Jeweils einer Plattform 24 ist eine erste Sendeeinheit 31 zugeordnet, die die betreffende Eintrittszone mit einem ersten intermittierenden elektromagnetischen Feld in einer Weckzone abdeckt. Die Eintrittszone umfasst die Plattform 24 und bei Stillstand des Wagens auch einen Sektor von etwa 3 m Radius ausserhalb und zwar unabhängig davon, welche Türe im konkreten Fall geöffnet ist. Eine zweite Sende-/Empfangseinheit 32 ist dem Passagierraum 23 zugeordnet, die diesen einschliesslich der Plattform 24 als Erfassungszone mit einem zweiten intermittierenden elektromagnetischen Feld abdeckt. Das erste elektromagnetische Feld weist vorzugsweise eine Frequenz auf, die in der Eintrittszone als Nahfeld ausgebildet ist, z.B. 7.68 MHz. In die Eintrittszone gelangende Billette 10 werden durch dieses Nahfeld geweckt, d.h. aus dem Ruhezustand in einen intermittierenden Empfangszustand gebracht. Das Wecken der Billette 10 kann aber auch auf andere Weise erfolgen, z.B. durch Einführen in ein Gerät oder durch ein berührungsloses Vorbeiziehen an einem Gerät, z.B. im Abstand von etwa 25 cm. Möglich ist auch eine manuelle Aktivierung mit einem am Billett 10 vorhandenen Schalter oder einem schalterartigen Betätigungselement. Das zweite elektromagnetische Feld weist eine bedeutend höhere Frequenz auf. Aufgrund der Frequenzregulierungen erweist sich eine Frequenz von 868 MHz als zweckmässig.

Die erste Sendeeinheit 31 ist über eine Verbindung 37 direkt oder indirekt mit einem Bordrechner 35 verbunden, die zweite Sende-/Empfangseinheit 32 ist über eine Verbindung 38 mit dem Bordrechner 35 gekoppelt. Die Kommunikation zwischen der zweiten Sende-/Empfangseinheit 32 und den Billetten 10 erfolgt mittels Informationseinheiten INF1 zum Billett und INF2 vom Billett 10. Der technische Ablauf dieser Kommunikation von einer Vielzahl solcher Billette 10 bezüglich des Eintritts in einen Wagen und dem Wecken dieser Billette mit der ersten Sendeeinheit 31 ist in der internationalen Anmeldung PCT/EP 00/08292 vorgeschlagen worden. Die Bezeichnung der Informationseinheiten INF1, INF2, INF3 im Dokument PCT/EP 00/08292 korrespondiert mit der hier verwendeten Bezeichnung über die Reihenfolge INFi, INF1 und INF2.

Die Informationseinheit INF1, die broadcastmässig oder adressiert von der Sende-/Empfangseinheit 32 den Billetten 10 in der Erfassungszone übermittelt wird, weist in einer Ausführungsform der vorliegenden Erfindung eine Struktur gemäss der nachfolgenden Tabelle 1 auf.

**Tabelle 1**

| **Informationseinheit INF1** | |
|---|---|
| **Informationsfelder** | **Bedeutung** |
| CYCLE2 | zeiteinheit und Zeitbezug |
| COMMAND2 | Befehl an das Billett 10 |
| POSITION2 | Ort |
| COURSE2 | Kursnummer |
| DATETIME2 | Datum und Uhrzeit |
| TYPE2 | Art des Verkehrsmittels |
| ADDRESS2 | Adresse der Sende-/Empfangseinheit 32 |
| LOCATION2 | Ortsinformation |
| TARIFUNIT2 | provisorische Tarifeinheit |
| : | |
| APPLICATION2 | Anwendung |

Aufgrund der einem Billett 10 übermittelten Informationsfelder POSITION2, COURSE2, DATETIME2, ADDRESS2, LOCATION2, und TARIFUNIT2 kann einerseits auf dem Billett 10 zusammen mit den Feldern einer vorhergehend übermittelten Informationseinheit INF1 ein Datensatz generiert werden, der beispielsweise eine Struktur gemäss Tabelle 2 aufweist:

**Tabelle 2**

| **Datensatz TRAVREC** | |
|---|---|
| **Informationsfelder** | **Bedeutung** |
| BEGIN_POS | Anfangsort |
| END_POS | temporärer Zielort |
| COURSE | Kursnummer |
| DATETIME | Datum und Uhrzeit |
| TYPE | Art des Verkehrsmittels |
| ADDRESS | Adresse der Sende-/Empfangseinheit 32 |
| TARIFUNITS | Kumulierte provisorische Tarifeinheiten |
| : | |
| : | |
| APPLICATION2 | |

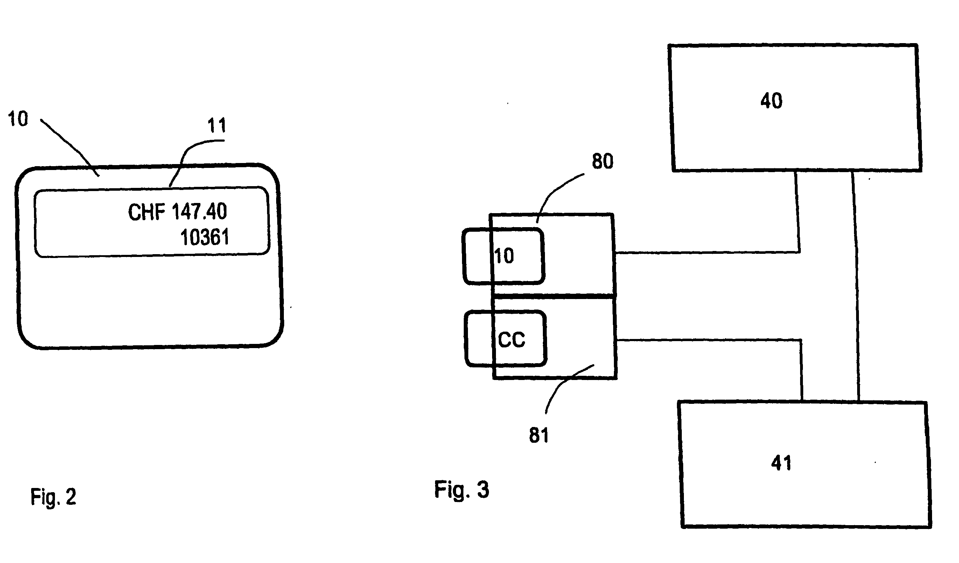

Aufgrund der übermittelten Adresse, der Kursnummer und der fortlaufenden Zeit ist es möglich, auf einem Billett 10 einen einzigen Datensatz TRAVREC bezüglich des Feldes BEGIN_POS so lange zu aktualisieren, als sich das Billett 10 in einer bestimmten Erfassungszone befindet. Wechselt ein Passagier während der Fahrt in einen anderen Wagen, wird vorzugsweise ein neuer Datensatz TRAVREC aufgebaut, da die Adresse der Sende-/Empfangseinheit 32 dadurch ändert. Auf dem Billett 10 befindet sich ein fiktives Konto, dessen Stand entweder als Betrag einer Währung, z.B. CHF, oder als ein Punktestand auf einem Anzeigeelement 11 des Billettes 10 darstellbar ist wie in Fig. 2 gezeigt. Durch die im Feld TARIFUNIT2 enthaltene provisorische Tarifeinheit sowie der zeit, erfolgt von diesem fiktiven Konto eine Buchung. Alternativ ist auch möglich, das die Angabe im Feld TARIFUNIT2 so strukturiert ist, dass eine weitere Abbuchung erst dann erfolgt, wenn im Feld TARIFUNIT2 ein Indikator geändert hat.

In der umgekehrten Richtung erfolgt die Kommunikation vom Billett 10 zum Bordrechner 35 mittels der Informationseinheiten INF2, deren Struktur in Tabelle 3 angegeben ist.

**Tabelle 3**

| **Informationseinheit INF2** | |
|---|---|
| **Informationsfeldes** | **Bedeutung** |
| ADDRESS3 | Empfangene Adresse einer Sende-/Empfangseinheit 32 |
| COURSE3 | Kursnummer |
| POSITION3 | Markierter Ort |
| ACTPOSITION3 | Aktuelle Lage gemäss der zuletzt empfangenen POSITION2 |
| DATETIME3 | Einsteigedatum und -zeit |
| TYPE3 | Art des Billettes |
| TICKET_ID3 | Billettnummer, Billett-ID |
| : | |
| ATTRIBUTES3 | Eigenschaften |
| STATE3 | Zustandsinformation |

Jedes Billett 10 weist eine eigene Billett-Nummer auf, die im folgenden kurz mit Billett-ID bezeichnet wird. Diese Billett-ID ist in der Informationseinheit INF2 im Feld TICKET_ID3 enthalten. Mit den in den Feldern TICKET_ID3, TYPE3, DATETIME3 und allenfalls ADDRESS3 wird im Bordrechner 35 für jedes Billett 10 ein Datensatz COACHREC aufgebaut, dessen Struktur mindestens die Felder aufweist, die der auf dem Billett 10 geführte Datensatz TRAVREC enthält. Je nach Vorgeschichte können zu einem durch eine eindeutige Billett-ID identifizierten Billett 10 mehrere solcher Datensätze COACHREC angelegt werden. Dies ist beispielsweise dann der Fall, wenn eine Personen zufälligerweise für verschiedene Fahrten dasselbe Fahrzeug benutzt oder falls ein Fahrzeug eine andere Linie befährt und dadurch mindestens die Kursnummer ändert.

Die im Bordrechner 35 gespeicherten Datensätze COACHREC werden nach Vorgaben der Transportunternehmung über eine Verbindung 39 zu einem abgesetzten Rechnersystem 40 übermittelt. Die Übermittlung ist vorzugsweise gesichert, insbesondere werden die im Bordrechner gespeicherten Datensätze COACHREC erst dann gelöscht, wenn vom abgesetzten Rechnersystem ein entsprechende Quittung empfangen wurde. Ein auf einem Billett 10 optional vorhandenes Betätigungselement kann auch dazu benutzt werden, um die gemeinsame Fahrt mit einer weiteren Person anzuzeigen. Eine Angabe von mehreren mitfahrenden Personen kann durch eine entsprechende mehrfache Betätigung gesetzt werden. Diese Angabe von solchen sogenannten verrechnungsrelevanten Parametern wird vorzugsweise im Feld ATTRIBUTES3 aufgeführt und an den Bordrechner 35 übermittelt.

Im Rechnersystem 40 werden in einer Datenbank FXACCOUNT anonyme Konti geführt. Ein anonymes Konto ist über eine Konto-ID und eine Billett-ID mit einem Billett 10 gemäss einer partiellen Darstellung in Tabelle 4 verknüpft:

**Tabelle 4**

| **Datenbank FXACCOUNT** | | | |
|---|---|---|---|
| Billett-ID | Konto-ID | Guthaben | Ablauf |
| 80002.34F01 | Q3-023.608 | 25.00 | 2004-12-31 |
| 10040.A6E20 | L0-839.778 | 1034.30 | 2002-06-30 |
| : | | | |
| 62235.F908A | M3-117.943 | 234.51 | 2002-04-15 |

Die Anonymität ist durch folgende Massnahmen sichergestellt: Die Transportunternehmung hält auf Vorrat Billette 10 und in der Datenbank FXACCOUNT für jedes Billett 10 eine eindeutige Zuordnung von Billett-ID zu Konto-ID, dabei kann ein Kontostand bereits über ein zu leistendes Pfand ebenfalls initialisiert sein, z.B. CHF 25.00. Die Zuordnung von Konto-ID zu Billett-ID braucht nicht eindeutig zu sein. Ein potentieller Fahrgast und Kunde einer solchen Transportunternehmung erwirbt gegen das erwähnte Pfand ein Billett 10. Zusammen mit dem Billett 10 wird diesem Fahrgast erstmalig auch eine Konto-ID mitgeteilt, vorzugsweise ist das Billett 10 zusammen mit einem Dokument enthaltend die Konto-ID in einer versiegelten Verpackungshülle enthalten, erst durch Zerstörung dieser Verpackungshülle ist die Konto-ID zugänglich. Die Billett-ID kann zusätzlich optisch, z.B. mit einem Strichcode, auf dem Billett 10 angeben sein, um auf vielfältige Weise diese Billett-ID erfassen und übertragen zu können. Der Verkauf solcher Billette 10 kann über irgendeine Verkaufskette, wie z.B. über einen Lebensmittelgrossverteiler, erfolgen.

In Fig. 3 sind die Komponenten für die Vornahme einer Vorauszahlung dargestellt. Wenigstens eine Schreib-/Lesevorrichtung 80 ist über eine Verbindung 82 mit dem abgesetzten Rechnersystem 40 verbunden; eine Card-Station 81 ist über eine Verbindung 43 mit dem Clearing-System eines Geldinstitutes verbunden. Je eine Card-Station 81 und eine Schreib-/Lesevorrichtung 80 sind vorzugsweise als eine Bedieneinheit für Publikum ausgebildet, ohne dass dabei eine funktionelle oder elektrische Kopplung erforderlich ist. Ueber eine der Schreib-/Lesevorrichtung 80 zugehörige Tastatur gibt der - anonyme - Karteninhaber ein geheimes der betreffenden Geldkarte zugehöriges Passwort ein und lässt mittels Angabe der Transportunternehmung und seiner Konto-ID seines dort geführtes Konto einen Betrag überweisen. Das im Rechnersystem 40 geführte Guthaben wird über die Schreib-/Lesestation 80 auf das Billett 10 übermittelt. Eine Aufstockung eines Guthabens wäre auch mit Bargeld denkbar, dazu benötigt eine Verkaufsstelle lediglich ein Schreiblese-Gerät 80 und ein Abbuchungssystem, mit dem der einbezahlte Betrag auf dem Konto der Transportunternehmung gutgeschrieben wird.

Unternimmt nun ein Fahrgast eine Reise mit einem solchen Billett 10, werden die Datensätze COACHREC auf die vorstehend beschriebene Weise an das Rechnersystem 40 übermittelt und dort durch eine Nachverarbeitung einschliesslich einer Rabattierung auf dem dem Billett 10 entsprechenden Konto gebucht. Für die Nachverarbeitung werden aufgrund der genauen Angaben in den Datensätze COACHREC die zentral gespeicherten Tariftabellen benutzt. Insbesondere mit den Angaben der Uhrzeit, des Kurses und der Ortsinformation gemäss den Feldern in der Informationseinheit INF2 ist es möglich, eine genaue Abrechnung zu erstellen, die die von der Strecke und der Uhrzeit abhängigen Tarife berücksichtigt. Auf dem Rechnersystem 40 werden in einer dem jeweiligen Billett 10 zugehörigen Konto die bisherigen Leistungsbezüge geführt. So ist es möglich, für eine oft befahrene Strecke einen Rabatt zu gewähren, der dem Tarif eines herkömmlichen Streckenabonnements entspricht. Der Benutzer des Billettes 10 muss hierfür überhaupt nichts unternehmen.

Die auf dem Billett 10 vorgenommene Abbuchung ist durch die Anlage von provisorischen Tarifeinheiten in der Regel höher als die tatsächliche Abbuchung auf dem Konto im Rechnersystem 40, da für die provisorischen Tarifeinheiten ein höherer Wert als für die tatsächlich zur Anwendung gelangenden Tarifeinheiten vorgesehen ist. Ein höherer Wert der tatsächlich zur Anwendung gelangenden Tarifeinheiten ist jedoch nicht zwingend, da bei der Buchung Mengenrabatte vorgesehen sein können, ist auch auf diese Weise sichergestellt, dass der Benutzer eines solchen Billettes 10 guthabenmässig stets auf der sicheren Seite ist. Bei einem nächsten Aufladen des Billettes 10 erfolgt eine Synchronisation des Guthabenstandes auf dem Billett 10 mit dem aktuellen Stand. Dabei ist es möglich, dass sich allein aufgrund der Synchronisation ohne Nachladen wieder ein erhebliches Guthaben auf dem Billett 10 befindet.

Dadurch, dass das mutmassliche Guthaben auf dem Billett 10 nachgeführt ist, kann auch eine Billettkontrolle relativ leicht erfolgen. An einer dem Bordrechner 35 zugeordneten Anzeigeeinheit 36 kann eine Kontrollperson entnehmen, ob sich "Grau-Fahrer" (das sind solche mit ungenügender Deckung) an Bord befinden. Die Kontrolle kann sich dann nur noch auf jene Personen beschränken, die überhaupt kein Billett 10 mit sich tragen. Die Detektion von solchen "Grau-Fahrern" erfolgt durch eine Uebermittlung einer Informationseinheit INF1 an die Billette 10, bei der im Feld COMMAND eine Aufforderung enthalten ist, den auf dem Billett 10 geführten Kontostand im Feld ATTRIBUTES3 der Informationseinheit INF2 zu übermitteln. Auf dem Bordrechner 35 ist durch Kursnummer und aktuellem Ort bekannt, welcher Minimalbetrag bis zum nächsten Halt mit Aussteigemöglichkeit erforderlich ist. Dadurch lässt sich für jedes in der Erfassungszone befindliche Billett 10 feststellen, ob eine ausreichende Deckung vorhanden ist. Eine mangelnde Deckung kann auch auf dem Billett 10 angezeigt werden, indem über die Felder COMMAND2 und APPLICATION2 in der Informationseinheit INF1 der minimal erforderliche Betrag zu den Billetten 10 broadcastmässig übertragen werden kann und somit alle Billettinhaber durch eine Klartext- oder Symbol-Anzeige auf dem Anzeigeelement 11 ersehen können, ob für die zu unternehmende Fahrt ein ausreichendes Guthaben vorhanden ist.

Es können auf dem Billett 10 verschiedene Schwellwerte vorgesehen werden, insbesondere auch noch durch Addition des geleisteten Pfandes. Es ist auch möglich, den erforderlichen Mindestbetrag von der Sendeeinheit 31 mit einer Informationseinheit INFi zu Billett 10 zu übertragen. Dadurch wird der potentielle Fahrgast bereits beim Betreten auf die mutmasslichen Kosten und die allfällige Deckung durch sein Guthaben informiert.

Für die Kontrollpersonen ist ein Kontrollgerät 50 vorgesehen, die eine vierte Sende-/Empfangseinheit für eine Verbindung mit einem Billett 10 aufweist. Das Kontrollgerät 50 weist wie die Billette 10 ebenfalls ein Sende-/Empfangsmodul auf und die für die betreffende Erfassungszone zutreffenden Informationen können mit den auf dem Billett 10 gespeicherten Datensätze TRAVREC auf dem Anzeigeelement 51 direkt und allenfalls in einem Vergleich angezeigt werden.

Dadurch, dass einem Fahrgast allein eine Konto-ID bekannt ist, darf ein solches Billett 10 auch verloren werden, ohne dass das Guthaben verloren ist. Im Verlustfall kann bei der Transportunternehmung ein neues Billett 10 mit einer neuen Billett-ID, erworben werden, auf dem Rechnersystem 40 braucht lediglich die Verknüpfung Billett-ID ↔ Konto-ID nachgeführt zu werden. Dadurch kann auch eine Liste ungültiger Billette 10 angelegt werden und über die Verbindung 39 auf die Bordrechner 35 übertragen werden. Auf diese Weise ist es möglich, ungültige oder als gestohlen gemeldete Billette 10 zu detektieren und auf der Anzeigeeinheit 36 des Bordrechners 35 anzuzeigen. Vorzugsweise werden hiefür in der Datenbank FXACCOUNT weitere Felder geführt, beispielsweise ein Feld ATTRIBUT, in welchem ein Status - auch Benutzungszustand genannt - eines Billettes geführt wird:
"Gestohlen", "Ungültig", "Gültig", "Freikarte", usw. Dieser Status kann auch über eine Interaktion am abgesetzten Rechnersystem 40 nachgeführt werden.

Durch die Verwendung einer Datenbank FXACCOUNT gemäss der partiellen Darstellung in Tabelle 4 ist es möglich, mehrere Billette 10 einem einzigen solchen Konto zuzuordnen. Dies ist insbesondere für Familien oder Firmen von Interesse, da dadurch weitere vor allem volumenabhängige Rabattierungen möglich werden.

Durch die Verwendung von bereits bekannten Zahlungssystemen wie Cash-Card, Credit-Card, Bank-Card und Bargeld können allfällige Sicherheitsbedenken der Geldinstitute betreffend der Uebermittlung von Geld über eine Luftschnittstelle sofort ausgeräumt werden, da die tatsächliche Abbuchung und Verschiebung von Geld über die bekannten und gesicherten Wege erfolgt.

Die vorstehend erwähnte Nachführung des Guthabens auf dem Billett 10 könnte auch bei einer pro Tag oder in einem anderen festen Zeitraster erstmaligen Erfassung eines Billettes 10 erfolgen, in dem aufgrund der zum Rechnersystem 40 übermittelten Billett-ID das tatsächliche Guthaben über die Verbindungen 39, 38 und die Informationseinheit INF1 zum Billett 10 übertragen werden.

Der im vorstehend erläuterten Ausführungsbeispiel aufgeführte Bordrechner 35 ist nicht zwingend vorzusehen. Es ist möglich, die zweite Sende-/Empfangseinheit 32, den Bordrechner 35 und eine dritte Sende-/Empfangseinheit für die Kopplung mit dem abgesetzten Rechnersystem 40 in einem einzigen Gerät zu integrieren. Je nach Einsatzgebiet kann auf die Anzeigeeinheit 36 verzichtet werden und die Datensätze COACHREC werden in diesem einzigen Gerät generiert, zwischengespeichert und bedarfsweise an ein abgesetztes Rechnersystem 40 übermittelt.

Die vorstehend beschriebene Ausführungsform der Erfindung für die Erfassung von Transportleistungen mit Passagieren ist nicht auf diese Anwendung allein beschränkt. Die Erfindung kann ebenso auch angewendet werden für den Besuch von Ausstellungen und Zentren, die in mehrere speziell kostenpflichtige Zonen unterteilt ist, z.B. verschiedene Kinosäle. Dadurch ist eine verursachergerechte und trotzdem anonyme Verrechnung der bezogenen Leistung gewährleistet. Darüber hinaus können die erhobenen Daten, im Falle von Transportunternehmungen die erhobenen Datensätze COACHREC auch zu statistischen Zwecken weiter verarbeitet werden, ohne dass eine Zuordnung von einzelnen Daten zu einer bestimmten Person möglich ist. Dadurch lassen sich insbesondere die anzuwendenden Tarife an die Bedürfnisse von Anbieter und Kunde anpassen, ggf. kann diese Anpassung auch automatisch erfolgen.

Die Erfindung ist auch in jenen Fällen insbesondere für eine Verrechnung auf Creditbasis anwendbar, wo auf das Erfordernis der anonymen Erfassung und Verrechnung verzichtet werden kann. Dazu braucht lediglich eine Zuordnung von Konto-ID zu einer Person vorgenommen werden. In diesem Fall ist es auch möglich, anstelle des Guthabens auf dem Billett 10 den kumulierten Betrag für die bezogenen Leistungen anzuzeigen. Mit der Benutzung einer Schreib-/Lesevorrichtung 80 oder durch direkt Uebermittlung kann der im Rechnersystem 40 geführte Betrag auch auf das Billett 10 übermittelt werden und somit ist der wahre Betrag anstelle des - aufgrund der übermittelten Tarifeinheiten - fiktiven Betrages auf dem Anzeigeelement 11 darstellbar.

Für das erfindungsgemässe Verfahren sind stets Ausführungsformen in Bezug eine kostenpflichte Leistung beschrieben worden. Das erfindungsgemässe Verfahren eignet sich auch für den Fall, wo mit der Erfassung eines Billettes 10 der betreffende Inhaber eine Gutschrift erhält, beispielsweise für die Erfassung der Bewegungen eines Nachtwächters in einem zu sichernden Bereich, der in mehrere vorgenannte Erfassungszonen gegliedert ist.

### Liste der Bezugszeichen

- 10: elektronisches Billett
- 11: Anzeigeelement (alphanumerisch/graphisch)
- 20: Eisenbahnwagen
- 21: Zwischenwand
- 23: Passagierraum
- 24: Plattform
- 25: Einstiegszone
- 26: Durchgangszone
- 31: erste Sendeeinheit
- 32: zweite Sende-/Empfangseinheit 32
- 34: vierte Sende-/Empfangseinheit auf Kontrollgerät 50
- 35: Bordrechner
- 36: Anzeigeeinheit am Bordrechner 35
- 37: Verbindung erste Sendeeinheit 31 mit der zweiten Sende-/Empfangseinheit 32
- 38: Verbindung zweiten Sende-/Empfangseinheit 32 mit dem Bordrechner 35
- 39: Funkverbindung Bordrechner 35 mit abgesetztem Rechnersystem 40
- 40: Abgesetztes Rechnersystem für Auswertung/Fakturierung
- 41: Clearing-System
- 42: Verbindung abgesetztes Rechnersystem 40 mit Schreib-/Lesevorrichtung 80
- 43: Verbindung Clearing-System 41 mit Card-Station 80
- 50: Kontrollgerät
- 51: Anzeigeelement
- 52: Tastatur
- 80: Schreib-/Lesevorrichtung für ein Billett 10
- 81: Card-Station
- CC: Credit-Card, Cash-Card, Bank-Card

## Patentansprüche

1. Verfahren zur Erfassung und Verrechnung einer Leistung, wobei mit der Erfassung eines Billettes (10) in einer der Leistung zugeordneten Erfassungszone (23, 24) eine Erfassung der Leistung gleichgesetzt wird,
**gekennzeichnet durch**
folgende Verfahrensschritte:
A auf dem Billett (10) wird ein Schattenkonto geführt, auf dem die erfasste Leistung entsprechend einer provisorischen Tarifeinheit gebucht wird;
B die Erfassung und eine Identität des Billettes (10) werden einem abgesetzten Rechnersystem (40) übermittelt und die erfasste Leistung wird entsprechend einer definitiven Tarifeinheit auf einem der Identität des Billettes (10) zugeordneten Konto gebucht.

2. Verfahren nach Anspruch 1
**dadurch gekennzeichnet, dass**
im Verfahrensschritt
A zwischen wenigstens einem Sende-/Empfangsmodul des Billettes (10) und einer in der Erfassungszone (23, 24) befindlichen Sende-/Empfangseinheit (32) mit Informationseinheiten (INF1, INF2) bidirektional kommuniziert wird und innerhalb der Erfassungszone (23, 24) erste Informationseinheiten (INF1) zu den Billetten (10) und zweite Informationseinheiten (INF2) zur Sende-/Empfangseinheit (32) übermittelt werden, dass fortlaufend in den ersten Informationseinheiten (INF1) enthaltene Informationen über erfasste Leistungen auf dem Billett (10) als Datensätze (TRAVREC) registriert werden und dass die provisorische Tarifeinheit in der ersten Informationseinheit (INF1) übermittelt wird;
und dass der Verfahrensschritt B gegliedert in die Schritte
B1 in welchem fortlaufend in den zweiten Informationseinheiten (INF2) enthaltene Informationen über Ort und Identität des betreffenden Billettes (10) in der Sende-/Empfangseinheit (32) mit Informationen über Datum/Zeit ergänzt und als Datensätze (COACHREC) zwischengespeichert werden,
und
B2 in welchem die zwischengespeicherten Datensätze (COACHREC) zu von Verfahrensschritten A und B1 unabhängigen Zeitpunkten von der Sende-/Empfangseinheit (32) einem abgesetzten Rechnersystem (40) zugeführt werden und mittels dem abgesetzten Rechnersystem (40) zugänglichen definitiven Tarifeinheiten erfolgt eine Buchung der bezogenen Leistung auf ein Konto, das der über die im gespeicherten Datensatz (COACHREC) enthaltende Identität des Billettes (10) zugeordnet ist.

3. Verfahren nach Anspruch 2,
**dadurch gekennzeichnet, dass**
dass das Billett (10) ein Anzeigeelement (11) aufweist, auf dem der Stand des Schattenkontos angezeigt wird.

4. Verfahren nach Anspruch 2,
**dadurch gekennzeichnet, dass**
im Verfahrensschritt A von wenigstens einer einer Einstiegszone (25) und/oder einer Durchgangszone (26) zugeordneten Sendeeinheit (31) eine weitere Informationseinheit (INFi) an alle in den vorgenannten beiden Zonen (25, 26) befindlichen Billette (10) übermittelt wird, in der ein Mindestbetrag enthalten ist und dass das Billett (10) ein Anzeigeelement (11) aufweist, auf dem der Stand des Schattenkontos angezeigt wird.

5. Verfahren nach einem der Ansprüche 2 bis 4,
**dadurch gekennzeichnet, dass**
im Verfahrensschritt A zu bestimmten Zeitpunkten in der ersten Informationseinheit (INF1) der Stand des im abgesetzten Rechnersystems (40) geführten Kontos übermittelt wird und auf das Schattenkonto übertragen wird.

6. Verfahren nach einem der Ansprüche 2 bis 5,
**dadurch gekennzeichnet, dass**
mit einem auf dem Billett (10) befindlichen Betätigungselement die Quantität der erfassten Leistung und/oder verrechnungsrelevante Parameter einstellbar sind.

7. Verfahren nach Anspruch 6,
**dadurch gekennzeichnet, dass**
mit dem Betätigungselement das Billett (10) aktiviert und deaktiviert werden kann.

8. Verfahren nach einem der Ansprüche 4 bis 7,
**dadurch gekennzeichnet, dass**
der Sende-/Empfangseinheit (32) ein Bordrechner (35) mit einer Anzeigeeinheit (36) zugeordnet ist und dass im Verfahrensschritt B1 in den zweiten Informationseinheiten (INF2) wenigstens ein Feld vorgesehen ist, in dem der Stand des Schattenkontos enthalten ist, und dass auf der Anzeigeeinheit (36) die Identität jener Billette (10) ausgegeben wird, die gegenüber dem Mindestbetrag eine ungenügende Deckung auf dem Schattenkonto aufweisen.

9. Verfahren nach einem der Ansprüche 2 bis 8,
**dadurch gekennzeichnet, dass**
die Identität mehrerer Billette (10) im abgesetzten Rechnersystem (40) einem einzigen Konto zugeordnet wird.

10. Verfahren nach einem der Ansprüche 2 bis 9,
**dadurch gekennzeichnet, dass**
die im Verfahrensschritt B2 vorgenommenen Buchungen abhängig vom Wert einer Summe bestimmter Buchungen oder abhängig vom Zeitpunkt der erfassten Leistung oder abhängig von der in den Datensätzen enthaltenen Art der erfassten Leistung durchgeführt werden.

11. Verfahren nach einem der Ansprüche 2 bis 10,
**dadurch gekennzeichnet, dass**
auf dem abgesetzten Rechnersystem (40) eine Datenbank über die Identität der Billette (10) und die Identität der geführten Konto vorgesehen ist und dass im Verfahrensschritt B2 oder durch eine Interaktion am abgesetzten Rechnersystem (40) in dieser Datenbank ein Benutzungszustand der Billette (10) nachgeführt wird.

## Claims

1. Method for recording and billing for a service, with recording of the service being equated with the recording of a ticket (10) in a recording zone (23, 24) assigned to the service,
**characterised by**
the following method steps:
A a shadow account is operated on the ticket (10), to which the recorded service is posted according to a provisional tariff unit;
B the recording and an identity of the ticket (10) are transmitted to a remote computer system (40) and the recorded service is posted to an account assigned to the identity of the ticket (10) according to a definitive tariff unit.

2. Method according to claim 1,
**characterised in that**
in method step
A there is bidirectional communication with information units (INF1, INF2) between at least one transmit/receive module of the ticket (10) and a transmit receive unit (32) located in the recording zone (23, 24) and within the recording zone (23, 24) first information units (INF1) are transmitted to the tickets (10) and second information units (INF2) are transmitted to the transmit/receive unit (32), information about recorded services contained continuously in the first information units (INF1) is registered as data records (TRAVEREC) on the ticket (10) and the provisional tariff unit is transmitted in the first information unit (INF1);
and that method step B is subdivided into the steps
B1 in which information about the location and identity of the relevant ticket (10) contained continuously in the second information units (INF2) is supplemented with date/time information and buffered as data records (COACHREC) in the transmit/receive unit (32),
and
B2 in which the buffered data records (COACHREC) are fed by the transmit/receive unit (32) to a remote computer system (40) at times that are independent of method steps A and B1 and definitive tariff units accessible to the remote computer system (40) are used to post the purchased service to an account, which is assigned to the identity of the ticket (10) contained in the stored data record (COACHREC).

3. Method according to claim 2,
**characterised in that**
the ticket (10) has a display element (11), on which the status of the shadow account is displayed.

4. Method according to claim 2,
**characterised in that**
in method step A a further information unit (INFi) is transmitted by at least one transmit unit (31) assigned to an entry zone (25) and/or a through zone (26) to all the tickets (10) located in the aforementioned two zones (25, 26), said further information unit (INFi) containing a minimum sum, and the ticket (10) has a display element (11), on which the status of the shadow account is displayed.

5. Method according to one of claims 2 to 4,
**characterised in that**
in method step A the status of the account operated in the remote computer system (40) is transmitted at specific times in the first information unit (INF1) and transferred to the shadow account.

6. Method according to one of claims 2 to 5,
**characterised in that**
the quantity of the recorded service and/or parameters of relevance to billing can be adjusted using an activation element located on the ticket (10).

7. Method according to claim 6,
**characterised in that**
the ticket (10) can be activated and deactivated using the activation element.

8. Method according to one of claims 4 to 7,
**characterised in that**
an on-board computer (35) with a display unit (36) is assigned to the transmit/receive unit (32) and in method step B1 at least one field is provided in the second information units (INF2) to contain the status of the shadow account and the identity of any ticket (10) having inadequate provision on the shadow account to cover the minimum sum is output on the display unit (36).

9. Method according to one of claims 2 to 8,
**characterised in that**
the identity of a number of tickets (10) is assigned to a single account in the remote computer system (40).

10. Method according to one of claims 2 to 9,
**characterised in that**
the postings made in method step B2 are effected as a function of the value of a sum of specific postings or as a function of the time of the recorded service or as a function of the nature of the recorded service contained in the data records.

11. Method according to one of claims 2 to 10,
**characterised in that**
a database relating to the identity of the ticket (10) and the identity of the operated account is provided on the remote computer system (40) and a usage status of the tickets (10) is monitored in said database in method step B2 or by means of an interaction at the remote computer system (40).

## Revendications

1. Procédé pour saisir et décompter un paiement, d'après lequel une saisie du paiement est réalisée quand un billet (10) est saisi dans une zone de saisie (23, 24) associée au paiement, **caractérisé par** les étapes suivantes :
A. on indique sur le billet (10) un compte virtuel sur lequel le paiement saisi est comptabilisé d'après une unité tarifaire provisoire,
B. la saisie et une identité du billet (10) sont transmis à un système de calcul (40) à distance et le paiement saisi est comptabilisé d'après une unité tarifaire définitive sur un compte associé à l'identité du billet (10).

2. Procédé selon la revendication 1, **caractérisé en ce que**, à l'étape
A une communication a lieu dans les deux sens entre au moins un module d'émission ou de réception du billet (10) et une unité d'émission ou de réception (32) située dans la zone de saisie (23, 24) grâce à des unités d'information (INF1, INF2) et, à l'intérieur de la zone de saisie (23, 24), de premières unités d'information (INF1) sont transmises aux billets (10) et de deuxièmes unités d'information (INF2) sont transmises à l'unité d'émission ou de réception (32), de sorte que les informations contenues dans les premières unités d'information (INF1) et relatives au paiement sont constamment saisies sur le billet (10) sous forme d'enregistrement (TRAVREC) et que l'unité tarifaire provisoire est transmise dans la première unité d'information (INF1),
et que l'étape B se subdivise en étapes
B 1 dans laquelle des informations relatives à l'endroit et à l'identité du billet (10) concerné et contenues dans les deuxièmes unités d'information (INF2) sont constamment complétées dans l'unité d'émission et de réception (32) par des informations relatives à la date et à l'heure et sont temporairement saisies sous forme d'enregistrements (COACHREC)
et
B 2 dans laquelle les enregistrements (COACHREC) temporairement saisis sont acheminés par l'unité d'émission et de réception (32) à un système de calcul (40) à distance à des instants indépendants des étapes A et B 1 et le paiement perçu est comptabilisé, à l'aide des unités tarifaires définitives accessibles par le système de calcul (40) à distance, sur un compte associé à l'identité - du billet (10) - contenue dans l'enregistrement (COACHREC) mémorisé.

3. Procédé selon la revendication 2, **caractérisé en ce que** le billet (10) comporte un élément d'affichage (11) sur lequel est indiqué l'état du compte virtuel.

4. Procédé selon la revendication 2, **caractérisé en ce que**, à l'étape A, une autre unité d'information (INFi) qui contient un montant minimal est transmise à tous les billets (10) situés dans les deux zones (25, 26) précédentes par au moins une unité d'émission (31) associée à une zone de montée (25) et/ou une zone de passage (26) et que le billet (10) comporte un élément d'affichage (11) sur lequel est indiqué l'état du compte virtuel.

5. Procédé selon l'une des revendications 2 à 4, **caractérisé en ce que**, à l'étape A, l'état du compte tenu dans le système de calcul (40) à distance est transmis à des instants définis à la première unité d'information (INF1) et est reporté sur le compte virtuel.

6. Procédé selon l'une des revendications 2 à 5, **caractérisé en ce que** la quantité du paiement saisi et/ou des paramètres relatifs au décompte peuvent être réglés à l'aide d'un élément de déclenchement situé sur le billet (10).

7. Procédé selon la revendication 6, **caractérisé en ce que** le billet (10) peut être activé et désactivé à l'aide de l'élément de déclenchement.

8. Procédé selon l'une des revendications 4 à 7, **caractérisé en ce qu'**un calculateur de bord (35) équipé d'une unité d'affichage (36) est associé à l'unité d'émission et de réception (32) et que, à l'étape B 1, au moins un champ qui contient l'état du compte virtuel est prévu dans les deuxièmes unités d'information (INF2) et que l'élément d'affichage (36) indique l'identité des billets (10) dont la provision sur le compte virtuel est insuffisante par rapport au montant minimal.

9. Procédé selon l'une des revendications 2 à 8, **caractérisé en ce que** l'identité de plusieurs billets (10) est associée à un seul compte dans le système de calcul (40) à distance.

10. Procédé selon l'une des revendications 2 à 9, **caractérisé en ce que** les comptabilisations réalisées à l'étape B 2 ont lieu en fonction du montant d'une somme de comptabilisations définies ou en fonction de l'instant où le paiement est saisi ou en fonction du type - contenu dans les enregistrements - du paiement saisi.

11. Procédé selon l'une des revendications 2 à 10, **caractérisé en ce qu'**une base de données relative à l'identité des billets (10) et à l'identité du compte tenu est prévue sur le système de calcul (40) à distance et qu'un état d'utilisation des billets (10) est contrôlé dans cette base de données à l'étape B 2 ou en interaction sur le système de calcul (40) à distance.
